Europäisches Patentamt

European Patent Office

Office européen des brevets

(19)

(11) Veröffentlichungsnummer: **0 229 127**
**B1**

(12) **EUROPÄISCHE PATENTSCHRIFT**

(45) Veröffentlichungstag der Patentschrift: **19.12.90**

(21) Anmeldenummer: **86904143.4**

(22) Anmeldetag: **27.06.86**

(86) Internationale Anmeldenummer:
**PCT/EP86/00381**

(87) Internationale Veröffentlichungsnummer:
**WO 87/00380 15.01.87 Gazette 87/01**

(51) Int. Cl.⁵: **H 04 N 5/782** // G04G15/00,
H04N7/087

(54) **EINRICHTUNG ZUM AUTOMATISCHEN EIN- UND AUSSCHALTEN DES AUFZEICHNUNGSBETRIEBS EINES VIDEO-RECORDERS.**

(30) Priorität: **06.07.85 DE 3524270**

(43) Veröffentlichungstag der Anmeldung:
**22.07.87 Patentblatt 87/30**

(45) Bekanntmachung des Hinweises auf die
Patenterteilung:
**19.12.90 Patentblatt 90/51**

(84) Benannte Vertragsstaaten:
**AT BE CH DE FR GB IT LI LU NL SE**

(56) Entgegenhaltungen:
**EP-A-0 041 121**
**EP-A-0 118 104**
**EP-A-0 133 985**

**Nachrichtentechnische Zeitschrift, Band 35, Nr. 6, Juni 1982, Schwäbisch Gmünd (DE) H. Eckhard Krüger: "Das digitale Fernsehkennungssystem ZPS" Seiten 368-376**

(73) Patentinhaber: **Deutsche Thomson-Brandt GmbH**
**Hermann-Schwer-Strasse 3 Postfach 1307**
**D-7730 Villingen-Schwenningen (DE)**

(72) Erfinder: **EIGELDINGER, Norbert**
**Sebastian-Kneippstrasse 104**
**D-7730 Villingen-Schwenningen (DE)**

EP 0 229 127 B1

**Beschreibung**

Die Erfindung betrifft eine Einrichtung zum automatischen Ein- und Ausschalten des Aufzeichnungsbetriebs eines Video-Recorders gemäß dem Oberbegriff des Patentanspruchs.

Aus der EP—A—0118104 wie auch aus der EP—A—0133985 — entsprechend DE—A—3328001 — sind Einrichtungen der eingangs genannten Art bekannt.

Diese vorbekannten Einrichtungen dienen dazu, einen Video-Recorder so zu steuern, daß er eine vom Benutzer eingespeicherte Fernsehsendung zur richtigen Zeit aufnimmt. Der Video-Recorder wird auuf diese Weise ereignis- und nicht zeitgesteuert. Damit wird gewährleistet, daß die gewünschte Fernsehsendung auch dann richtig aufgenommen wird, wenn durch zeitliche Programmverschiebung die Sendung von der einprogrammierten Zeit abweichend ausgestrahlt wird. Dazu wird ein für die betreffende Sendung typisches Identifikationssignal in einer Datenzeile während der vertikalen Austastlücke ausgesendet. Mit Hilfe der bekannten Einrichtungen wird der Video-Recorder zu einer vorgegebenen Zeitspanne t1 vor dem einprogrammierten Zeitpunkt ts auf Stand-by-Betrieb geschaltet, dessen Motoren bei Erscheinen des Identifikationssignals I(ts) eingeschaltet werden, und die Aufnahme beginnt.

Fallen nun jedoch aus irgendeinem Grund, der beim Sender oder in der Übertragungsstrecke oder im Datenzeilendecoder liegen kann, die Datenzeilen aus, so ist es bei den bekannten Einrichtungen von Nachteil, daß der Video-Recorder sofort abgeschaltet wird, obwohl die eigentliche Sendung noch läuft und aufgenommen werden könnte. Vor allem während des Stand-by-Betriebs des Video-Recorders, wenn dieser also auf das Erscheinen des Identifikationssignals in der Datenzeile wartet, ist es nachteilig, daß eine Sendung nicht aufgenommen wird, obwohl diese ausgestrahlt wird.

Der Erindung liegt die Aufgabe zugrunde, den Video-Recorder trotz Ausfall der Datenzeile vor Beginn der programmierten Sendung einschaltbar zu halten und bei Ausfall des gesamten Sendesignals (FBAS) den Aufnahmebetrieb über einen festgelegten Zeitraum aufrechtzuerhalten. Diese Aufgabe wird durch die im Patentanspruch angegebenen Merkmale gelöst.

Die Erfindung wird nachstehend mit Hilfe der Zeichnung erläutert. Dabei zeigen:

Fig. 1 den Schaltungsaufbau der Erfindung,

Fig. 2 ein Zeitdiagramm zur Erläuterung der Wirkungsweise der Erfindung und

Fig. 3 ein Flußdiagramm der in der Einrichtung zum automatischen Ein- und Ausschalten eines Video-Recorders ablaufenden Schritte.

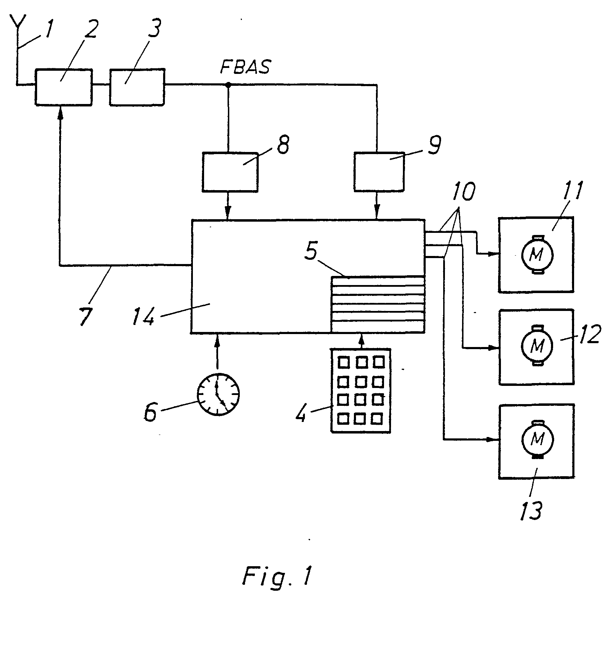

In Figur 1 sind die wesentlichen der Erfindung zugrunde liegenden Baugruppen eingezeichnet. Das Fernsehsignal gelangt über die Antenne 1 an den Tuner 2, der das Signal in eine Zwischenfrequenz umsetzt, welches am Ausgang eines ZF-Verstärkers 3 als FBAS-Signal zur Verfügung steht. Über z.B. eine Tastatur 4 sind Sender eingebbar, deren Einstellwerte in einem Speicher 5 einer Steuerschaltung 14 abgelegt werden können. Videorecorder besitzen eine Uhr 6, die auf die Realzeit eingestellt wird. Man kann durch Eingeben der Uhrzeit ts zusammen mit den Kanaldaten für ein zu einem gewünschten Zeitpunkt aufzuzeichnendes Sendersignal erreichen, daß bei Übereinstimmung der Realzeit tR mit der eingegebenen Sollzeit ts der Videorecorder eingeschaltet wird, wobei die Abstimmwerte über eine Steuerleitung 7 an den einzustellenden Tuner 2 gelangen.

Zur Identifikation der Datenzeile und des darin enthaltenen Identifikationssignals einer Sendung, welches während ihrer Dauer mitgesendet wird, dient ein Identifikationsdecoder 8. Zusätzlich wird noch über eine Stufe 9 ein Mute-Signal erzeugt, welches bei Ausfall der Datenzeile die Steuereinheit 14 derart beeinflußt, daß sie trotz Fehlen des Identifikationssignals über die Steuerleitungen 10 den Einfädelmotor 11, den Capstanmotor 12 und den Kopftrommelmotor 13 in Bewegung setzt, wenn die durch die Uhr 6 gemessene Realzeit tR mit der eingegebenen Sollzeit tS übereinstimmt.

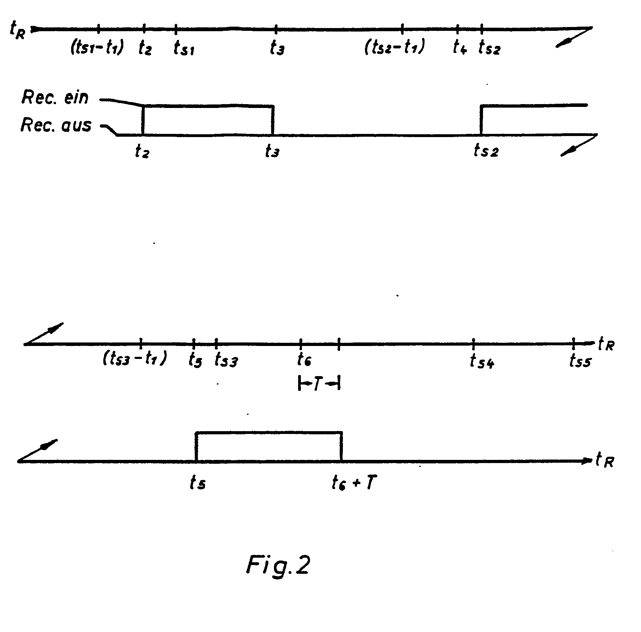

In Figur 2 ist die ablaufende Realzeit $t_R$ aufgetragen. Zu den Zeitpunkten ts1, ts2, ts3, ts4 und ts5 sind die Anfangszeiten von Sendungen eingetragen, die in dem Speicher 5 abgelegt sind. Wird jeweils die um die Vorlaufzeit t1 verminderte Sollzeit ts erreicht, wird die Erkennungsschaltung 8 eingeschaltet, indem der Empfänger auf den Stand-by-Betrieb geht. Erscheint z.B. zum Zeitpunkt t2 die Identifikation I (ts1) wird der Videorecorder in Aufnahmestellung geschaltet. Zum Zeitpunkt t3 verschwindet die vom Sender ausgestrahlte Identifikation I (ts1) zum Zeichen des Endes der aufzuzeichnenden Sendung und der Videorecorder wird abgeschaltet.

Es wird nun der Fall angenommen, daß vor Erreichen einer eingespeicherten Sollzeit ts2 die Datenzeile des Sendersignals zum Zeitpunkt t4 ausfällt. Dann wird der Videorecorder mit Hilfe der Timeruhr 6 zum programmierten Zeitpunkt ts2 eingeschaltet, nachdem durch die Mute-Schaltung 9 ein Sendersignal festgestellt wurde.

Wenn der Videorecorder zum Zeitpunkt t5 durch das Identifikationssignal I (ts3) eingeschaltet wurde und zum Zeitpunkt t6 das Sendesignal total ausfällt, d.h. weder Datenzeile noch FBAS-Signal sind vorhanden, bleibt der Videorecorder während einer vorgebbaren Zeitspanne T noch in Aufnahmestellung, wonach er automatisch abgeschaltet wird. Es wird dadurch erreicht, das das Magnetband für weitere programmierte Sollzeiten ts4, ts5 zur Verfügung steht.

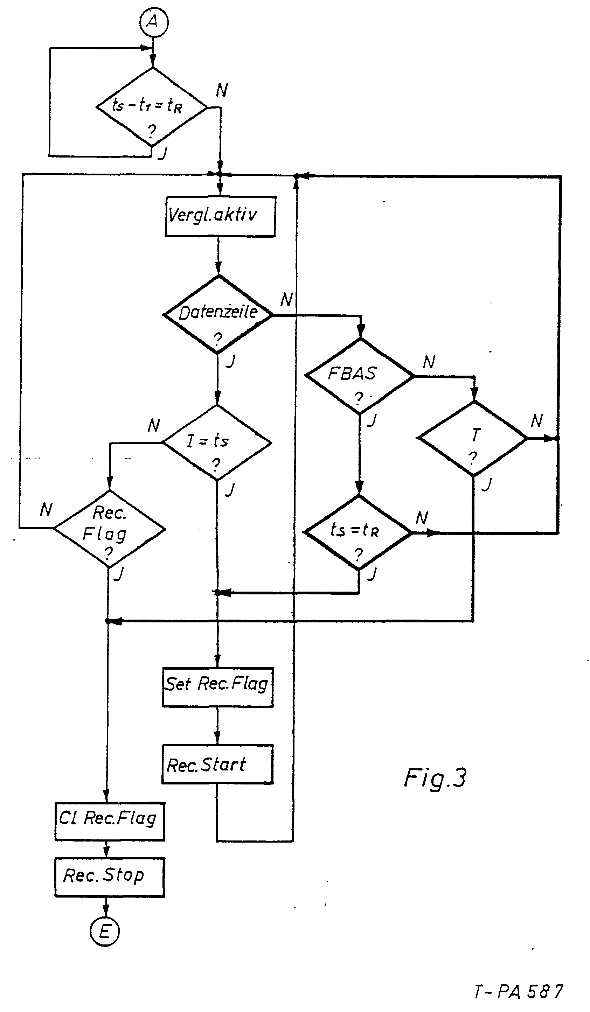

Mit Hilfe der Figur 3 in Form eines Flußdiagramms wird der zeitliche Ablauf der sich in der Schaltung nach Figur 1 abspielenden Vorgänge beschrieben. Hierbei sind die in der bekannten DE-OS 33 28 001 gezeigten Blöcke des Flußdiagramms ebenfalls enthalten. Die zusätzlichen durch die Erfindung offenbarten Schritte sind durch stärkere Linien besonders hervorgehoben.

Zu Anfang des Flußdiagramms wird in einer Abfrageschleife entschieden, ob die programmierte Sollzeit ts abzüglich der Vorlaufzeit t1 größer als die Realzeit $t_R$ ist. Wird der Zeitpunkt tst1 erreicht, werden die Empfangsstufen des Videorecorders aktiviert. Daraufhin wird geprüft, ob die Datenzeile vorhanden ist, wenn ja, wird zum Zeitpunkt des Auftretens des Identifikationssignals das Recorder-Flag gesetzt und der Start des Videorecorders in Gang gesetzt. Das Magnetband wird eingefädelt, der Capstanmotor und der Kopftrommelmotor werden eingeschaltet. Ist der genannte Zeitpunkt noch nicht erreicht, wird das Recorder-Flag gelöscht und der Recorder gestoppt bzw. wird die Schleife von vorne durchlaufen.

Durch die zusätzliche Überprüfung der Datenzeile ist die Möglichkeit gegeben, in Verbindung mit einem Mute-Signal den Funktionsablauf derart zu gestalten, daß, sollte durch einen Defekt im Sender oder im Decoder des Empfängers die Datenzeile nicht vorhanden sein, der Videorecorder trotzdem zur gewünschten vorprogrammierten Zeit anläuft und zwar zeitgesteuert über den Timer wie bisher jedoch nicht ereignisgesteuert. Es muß in diesem Falle zwar damit gerechnet werden, daß die gewünschte Sendung zu früh oder zu spät aufgenommen wird, aber sie wird im Gegensatz zur bekannten Einrichtung wenigstens aufgenommen. Deshalb wird in Verbindung mit der Datenzeilenprüfung eine Überprüfung des Mute-Signals vorgenommen. Ist dieses vorhanden, wird der Videorecorder in Aufnahmestellung gebracht. Ist bei Fehlen der Datenzeile während einer vorgebbaren Zeit T (z.B. 10 min.) immer noch kein Mute-Signal feststellbar, wird das Recorder-Flag gelöscht und der Videorecorder in Stoppstellung gebracht. Auf diese Weise wird erreicht, daß noch später liegende vorprogrammierte Speicherplätze abgearbeitet werden können und noch Magnetband für weitere Aufnahmen zur Verfügung steht.

Zur Vervollständigung des Systems kann die Einrichtung derart erweitert werden, daß bei Verschwinden des FBAS-Signals während einer Aufzeichnung, z.B. durch Senderausfall, und dadurch bedingter Zeitverschiebung der übrigen gespeicherten Einschaltzeiten von Programmen, die dann nicht mehr aufgenommen werden, eine spezielle Kennung für die betreffenden programmierten Speicherplätze vorgesehen ist, um dem Benutzer anzuzeigen, daß die gewünschte Sendung nicht aufgenommen wurde.

Außerdem kann vorgesehen werden, daß eine besondere Kennzeichnung in der Weise erfolgt, die aussagt, daß ein bestimmtes Programm gar nicht ausgestrahlt wurde. Dies geschieht vorteilhaft mit dem am Sendeschluß, d.h. am Ende des Tages, ausgestrahlten Leercode. Dieser Leercode in Kombination mit der Feststellung, daß kein FBAS-Signal anliegt, wirkt auf sämtliche programmierten Timerplätze zwecks Kennzeichnung, daß das entsprechende Identifikationssignal nicht gesendet wurde.

**Patentanspruch**

Einrichtung zum automatischen Ein- und Ausschalten des Aufzeichnungsbetriebes eines mit einer Realzeit-Kalenderuhr, einer Speichereinrichtung und einem Datenvergleicher ausgerüsteten Video-Recorders, bei welchem die Zeit und das Datum des vorgesehenen Beginns eines Fernsehprogrammbeitrages als Sollwert in die Speichereinrichtung eingebbar und als ein für die Dauer des Programmbeitrages innerhalb des betreffenden Fernsehsignals in einer Datenzeile als Idendifikationssignal zyklisch mitübertragener statischer Istwert empfangbar und mit den gespeicherten Solldaten vergleichbar ist, wobei der Empfang des Istwert-Identifikationssignals und sein Vergleich mit dem gespeicherten Sollwert um eine vorgegebene Vorlaufzeit vor dem der gespeicherten Soll-Zeit und dem gespeicherten Soll-Datum entsprechenden Realzeitpunkt wirksam geschaltet ist, gekennzeichnet durch eine zusätzlich zu der Einrichtung zur Überprüfung der Anwesenheit der Datenzeile vorgesehene Einrichtung zur Überprüfung der Anwesenheit eines FBAS-Signals, wobei die Einrichtung zur Überprüfung der Anwesenheit des FBAS-Signals bei Abwesenheit der Datenzeile den Video-Recorder über den Vergleich der eingespeicherten Soll-Zeit mit der Realzeit der Kalenderuhr einschaltet, wobei ferner eine Einrichtung vorgesehen ist, die den Antriebs-Motor des Video-Recorders bei Ausfall eines Sendersignals nach einer vorgebbaren Zeit abschaltet und den Video-Recorder für die Überprüfung des nächstfolgenden abgespeicherten Einschaltzeitpunktes in den Stand-by-Betrieb umschaltet.

**Revendication**

Dispositif pour la mise en marche et l'arrêt automatiques du mode d'enregistrement d'un magnétoscope équipé d'une horloge-calendrier à temps réel, d'un dispositif de mise en mémoire et d'un comparateur de données, dans lequel le temps et la date du début prévu d'une émission de télévision peuvent être entrés dans le dispositif de mise en mémoire comme valeur de réglage, réceptionnés comme valeur effective statique transférée de manière cyclique pendant la durée de l'émission au sein du signal de télévision concerné dans une ligne de données comme signal d'identification et comparés avec les données de réglage mémorisées, la réception du signal d'identification/de la valeur effective et sa comparaison avec la valeur de réglage mémorisée diminuée d'un temps d'attente prédéterminé commençant de manière effective avant le moment de temps réel correspondant au temps de réglage mémorisé et à la date de réglage mémorisée, caractérisé par un dispositif pour vérifier la présence d'un signal composé de chrominance, en plus du dispositif pour vérifier la présence de la ligne de données, le dispositif pour vérifier la présence du signal composé de chrominance mettant en marche le magnétoscope, en cas d'absence de la ligne de données, en comparant le temps de réglage mémorisé avec le temps réel de l'horloge-calendrier, un dispositif étant de plus prévu pour arrêter le cabestan du magnétoscope après une période pouvant être donnée à l'avance, en cas de défaillance du signal de l'émetteur, et commutant le magnétoscope en mode d'attente pour vérifier le temps de mise en marche mémorisé suivant.

**Claim**

Device for automatically switching on and off the recording function of a video recorder equipped with a real-time calendar clock, a storage device and a date comparator, in which the time and date of the intended start of a television programme can be inputted as a desired value into the storage device, received as a static actual value co-transmitted cyclically as an identification signal in a data line within the respective television signal for the period of the programme, and compared with the stored desired data, in which the receipt of the actual value identification signal and its comparison with the stored desired value is effectively switched on at a pre-set lead time prior to the actual instant corresponding to the stored desired time and the stored desired date, characterised by a device provided for checking the presence of a composite colour signal, additional to the device for checking the presence of a data line, in which, if the data line is absent, the device for checking the presence of the composite colour signal switches on the video recorder by comparing the stored desired time with the real time of the calendar clock, and in which a device is also provided which, upon loss of a transmitter signal, switches off the drive motor of the video recorder after a pre-set time and switches the video recorder into stand-by mode in order to check the following stored switching-on time.

*Fig. 1*

Fig.2

Fig.3

T-PA 587